# EUROPEAN PATENT SPECIFICATION

(11) **EP 4 481 728 B1**
(45) Date of publication and mention of the grant of the patent: **15.04.2026**
(21) Application number: 24183846.5
(22) Date of filing: 21.06.2024
(51) Int. Cl.: G10L 17/04

(54) **SYSTEMS AND METHODS OF VOICEPRINT AUTHENTICATION AND INTERPOLATION**
SYSTEME UND VERFAHREN ZUR STIMMABDRUCKAUTHENTIFIKATION UND -INTERPOLATION
SYSTÈMES ET PROCÉDÉS D'AUTHENTIFICATION ET D'INTERPOLATION D'EMPREINTE VOCALE

(30) Priority: 22.06.2023 US 202318339677
(43) Date of publication of application: 25.12.2024
(73) Proprietor: Toyota Connected North America, Inc., Plano, TX 75024 (US)
(72) Inventor: SMITH, Taylor, Texas (US); MA, King Chun, Texas (US); RESNICK, Benjamin R., Texas (US); SIDDIQUI, Haris, Texas (US)
(74) Representative: D Young & Co LLP

(56) References cited:
- US-A1- 2021 326 421
- US-B2- 8 566 093

## Description

The embodiments described herein generally relate to applications of a voice user interface, and more particularly, to vehicle voiceprint recognition and authentication.

### BACKGROUND

Modern vehicles use services that need authentication, such as remote start, locking/unlocking vehicles, valeting, and geofencing. Authentication is an important function in security to identify an entity for services the vehicle may provide. Once authenticated, vehicles may authorize a user to access specific services or data. Accordingly, a need exists for systems of accurate and efficient authentication to access a vehicle system.

US 2021/216421 A1 describes a system for passive and continuous multi-speaker voice biometrics. US 8 566 093 B2 describes a system for intersession variability compensation for automatic extraction of information from voice.

### SUMMARY

In one embodiment, a method may include generating, using a neural network trained to generate features based on training data comprising human voices spoken by a plurality of historical speakers inside a vehicle, input features based on a human voice of a current speaker inside the vehicle, and calculating similarities between an input vector of the input features and historical vectors in voiceprints of one or more enrolled users. After determining a similarity between the input vector and at least one historical vector in a voiceprint of an identified user is less than a threshold similarity, the method includes authenticating the current speaker as the identified user, calculating a probabilistic notion based on the similarity, and interpolating downstream user preference embeddings to generate an interpolated embedding by applying the probabilistic notion to weigh each downstream user preference embedding associated with the identified user.

In another embodiment, a system includes a controller to generate, using a neural network trained to generate features based on training data comprising human voices spoken by a plurality of historical speakers inside a vehicle, input features based on a human voice of a current speaker inside the vehicle, and calculate similarities between an input vector of the input features and historical vectors in voiceprints of one or more enrolled users. After determining a similarity between the input vector and at least one historical vector in a voiceprint of an identified user is less than a threshold similarity, the controller may authenticate the current speaker as the identified user, calculate a probabilistic notion based on the similarity, and interpolate downstream user preference embeddings to generate an interpolated embedding by applying the probabilistic notion to weigh each downstream user preference embedding associated with the identified user.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 depicts example non-limiting devices of the voiceprint authentication system of the present disclosure, according to one or more embodiments described and illustrated herein;
FIG. 2A depicts an illustrative block diagram of an illustrative implementation of the voice feature module, the similarity module, and the authentication module of the present disclosure, according to one or more embodiments described and illustrated herein;
FIG. 2B depicts an illustrative block diagram of an illustrative implementation of the authentication module for authentication and generation of a probabilistic notion for weighting and interpolation, according to one or more embodiments described and illustrated herein;
FIG. 3 depicts an illustrative block diagram of a neural network that is trained and applied in the voiceprint authentication system of the present disclosure, according to one or more embodiments described and illustrated herein;
FIG. 4 depicts an example internal view of a vehicle equipped with the voiceprint authentication system of the present disclosure, according to one or more embodiments described and illustrated herein;
FIG. 5A depicts an example original cluster of multi-user voiceprints in the voiceprint authentication system of the present disclosure, according to one or more embodiments described and illustrated herein;
FIG. 5B depicts an example shrunk cluster of multi-user voiceprints in the voiceprint authentication system of the present disclosure, according to one or more embodiments described and illustrated herein;
FIG. 6 depicts a flowchart describing the operation of the voiceprint authentication system of the present disclosure for voiceprint authentication and interpolation, according to one or more embodiments described and illustrated herein;
FIG. 7 depicts a flowchart describing the operation of the neural network of the voiceprint authentication system of the present disclosure, according to one or more embodiments described and illustrated herein; and
FIG. 8 depicts a flowchart describing the steps of the method for authenticating a speaker and applying a probabilistic notion for interpolation of the present disclosure.

### DETAILED DESCRIPTION

The embodiments disclosed herein are directed to methods and systems for voiceprint authentication and interpolation. A system creates a voiceprint for a user and allows for authentication of the user from the user's voice. Modern vehicles provide functions and services where authentication of enrolled users is performed before a user may use these functions and services. However, methods of authentication, such as passwords or PIN codes, are easily compromised, and sometimes inconvenient or impractical to use. Voiceprint authentication overcomes these problems by providing a more secure and convenient way to authenticate the user of a vehicle. Voiceprint authentication is based on the unique characteristics of a person's voice that are difficult to forge, making voiceprint authentication a secure method of authentication. Voiceprint authentication is convenient as the users need only use their voice and speak into the vehicle's microphone, with no need to remember any passwords or PIN codes. Further, voiceprint authentication is flexible for different purposes, such as preventing unauthorized use of vehicles, tracking vehicle usage, and monitoring multiple fleet vehicles.

The voiceprint authentication disclosed herein may use an active voice biometric identification or a passive voice biometric identification. An active approach entails an explicit voice registration process which the user opts into, and is guided through. An active voice biometrics approach requires the user to recite a predetermined script multiple times, explicitly establishing their unique voiceprint. Each time the user uses the active authentication, the user has to say a passphrase. The active authentication system compares the user's voice with the recorded script. The user is fully aware of the authentication process.

A passive approach infers anonymized user IDs based on speech occurring within the vehicle. In passive voice authentication, no specific passphrase needs to be said. A user may engage in a regular conversation to trigger the passive authentication and the passive authentication may continuously re-identify and re-authenticate the user. A voiceprint of a user may be recorded in the system, including the initial enrollment recording and/or continuous recordings after enrollment. When a user speaks in the vehicle, the system compares the user's speech to the voiceprint and verifies the speech, regardless of what the user is saying.

The embodiments disclosed herein include a passive enrollment of a re-occurring background process. During the process, samples of speech are embedded and stored, and unsupervised clustering is performed at regular intervals. After collecting and processing several voice samples, the voiceprint authentication system creates an embedding of features with high confidence that the embedding belongs to the same speaker. The voice authentication system may further refine the embedding boundaries for existing enrolled users. The voice authentication system may have a function to create a new embedding assigned to an anonymous non-user when the detected voiceprint does not belong to any known users. The canonical passively enrolled embeddings may be used to improve users' experience with their in-car virtual assistant.

Based on the comparison of the speech and voiceprint, the system further generates a probabilistic notion based on their similarity and use the probabilistic notion in downstream "user preference" embeddings that require authentication. The use of a probabilistic notion in downstream embeddings improves the robustness of the user preference modeling, for example, reducing the noise level, capturing variability in the user preference embeddings, and improving the accuracy of recommendations.

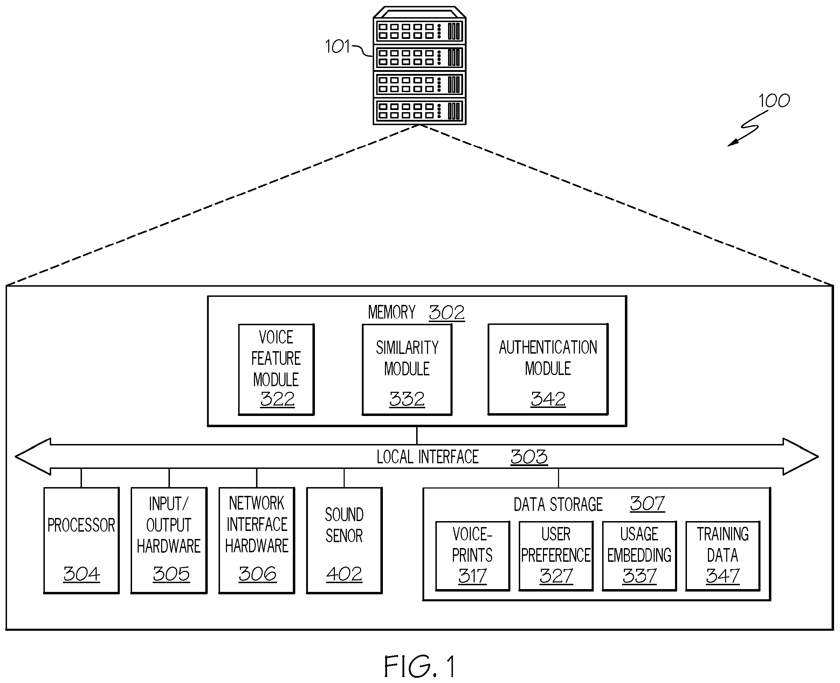

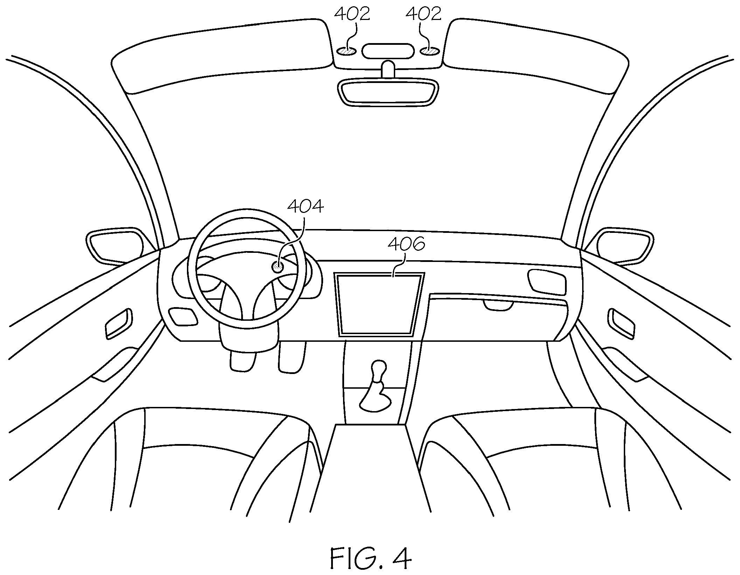

Turning to the figures, FIG. 1 depicts an illustrative embodiment of a voiceprint authentication system 100. The voiceprint authentication system 100 may comprise a voice feature module 322, a similarity module 332, and an authentication module 342. The voiceprint authentication system 100 depicted in FIG. 1 includes a computing device equipped in the vehicle that includes a controller 101. The controller 101 may further comprise various components, such as a memory 302, a processor 304, an input/output hardware 305, a network interface hardware 306, a data storage component 307, a local interface 303, and a sound sensor 402. The voiceprint authentication system 100 may further include a button 404 (e.g. as illustrated in FIG. 4) and a touchscreen 406 (e.g. as illustrated in FIG. 4).

The controller 101 may be any device or combination of components comprising a processor 304 and a memory 302, such as a non-transitory computer readable memory. The processor 304 may be any device capable of executing the machine-readable instruction set stored in the non-transitory computer readable memory. Accordingly, the processor 304 may be an electric controller, an integrated circuit, a microchip, a computer, or any other computing device. The processor 304 may include any processing component(s) configured to receive and execute programming instructions (such as from the data storage component 307 and/or the memory component 302). The instructions may be in the form of a machine-readable instruction set stored in the data storage component 307 and/or the memory component 302. The processor 304 is communicatively coupled to the other components of the controller 101 by the local interface 303. Accordingly, the local interface 303 may communicatively couple any number of processors 304 with one another, and allow the components coupled to the local interface 303 to operate in a distributed computing environment. The local interface 303 may be implemented as a bus or other interface to facilitate communication among the components of the controller 101. In some embodiments, each of the components may operate as a node that may send and/or receive data. While the embodiment depicted in FIG. 1 includes a single processor 304, other embodiments may include more than one processor.

The memory 302 (e.g., a non-transitory computer-readable memory component) may comprise RAM, ROM, flash memories, hard drives, or any non-transitory memory device capable of storing machine-readable instructions such that the machine-readable instructions can be accessed and executed by the processor 304. The machine-readable instruction set may comprise logic or algorithm(s) written in any programming language of any generation (e.g., 1GL, 2GL, 3GL, 4GL, or 5GL) such as, for example, machine language that may be directly executed by the processor 304, or assembly language, object-oriented programming (OOP), scripting languages, microcode, etc., that may be compiled or assembled into machine readable instructions and stored in the memory 302. Alternatively, the machine-readable instruction set may be written in a hardware description language (HDL), such as logic implemented via either a field-programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components. For example, the memory component 302 may be a machine-readable memory (which may also be referred to as a non-transitory processor-readable memory or medium) that stores instructions that, when executed by the processor 304, causes the processor 304 to perform a method or control scheme as described herein. While the embodiment depicted in FIG. 1 includes a single non-transitory computer-readable memory 302, other embodiments may include more than one memory module.

The input/output hardware 305 may include a monitor, keyboard, mouse, printer, camera, microphone, speaker, and/or other device for receiving, sending, and/or presenting data. The network interface hardware 306 may include any wired or wireless networking hardware, such as a modem, LAN port, Wi-Fi card, WiMax card, mobile communications hardware, and/or other hardware for communicating with other networks and/or devices.

The sound sensor 402 is coupled to the local interface 303 and communicatively coupled to the processor 304. The sound sensor 402 may be one or more sensors coupled to the voiceprint authentication system 100 for determining the volume, pitch, frequency, and/or features of sounds in a vehicle. The sound sensor 402 may include a microphone or an array of microphones that may include mechanisms to filter background noise, such as engine sounds or beamforming.

The data storage component 307 stores voiceprints 317, user preference 327, usage embedding 337, and training data 347.

The memory component 302 may include the voice feature module 322, the similarity module 332, and the authentication module 342. The voice feature module 322 may further include a neural network module comprising an encoder and a decoder.

The voice feature module 322 may be trained and provided machine learning capabilities via the neural network 122 as described herein. By way of example, and not as a limitation, the neural network 122 may utilize one or more artificial neural networks (ANNs). In ANNs, connections between nodes may form a directed acyclic graph (DAG). ANNs may include node inputs, one or more hidden activation layers, and node outputs, and may be utilized with activation functions in the one or more hidden activation layers such as a linear function, a step function, logistic (sigmoid) function, a tanh function, a rectified linear unit (ReLu) function, or combinations thereof. ANNs are trained by applying such activation functions to training data sets to determine an optimized solution from adjustable weights and biases applied to nodes within the hidden activation layers to generate one or more outputs as the optimized solution with a minimized error. In machine learning applications, new inputs may be provided (such as the generated one or more outputs) to the ANN model as training data to continue to improve accuracy and minimize error of the ANN model. The one or more ANN models may utilize one to one, one to many, many to one, and/or many to many (e.g., sequence to sequence) sequence modeling. The one or more ANN models may employ a combination of artificial intelligence techniques, such as, but not limited to, Deep Learning, Random Forest Classifiers, Feature extraction from audio, images, clustering algorithms, or combinations thereof. In some embodiments, a convolutional neural network (CNN) may be utilized. For example, a convolutional neural network (CNN) may be used as an ANN that, in a field of machine learning, for example, is a class of deep, feed-forward ANNs applied for audio analysis of the recordings. CNNs may be shift or space invariant and utilize shared-weight architecture and translation.

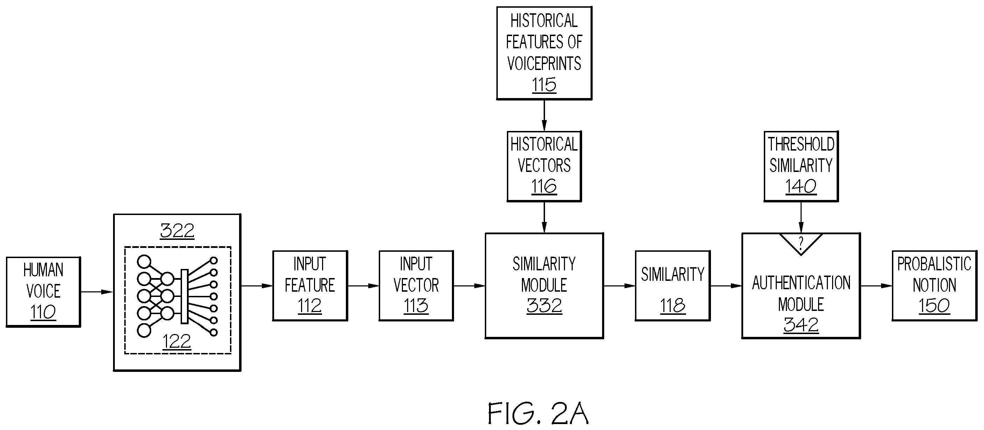

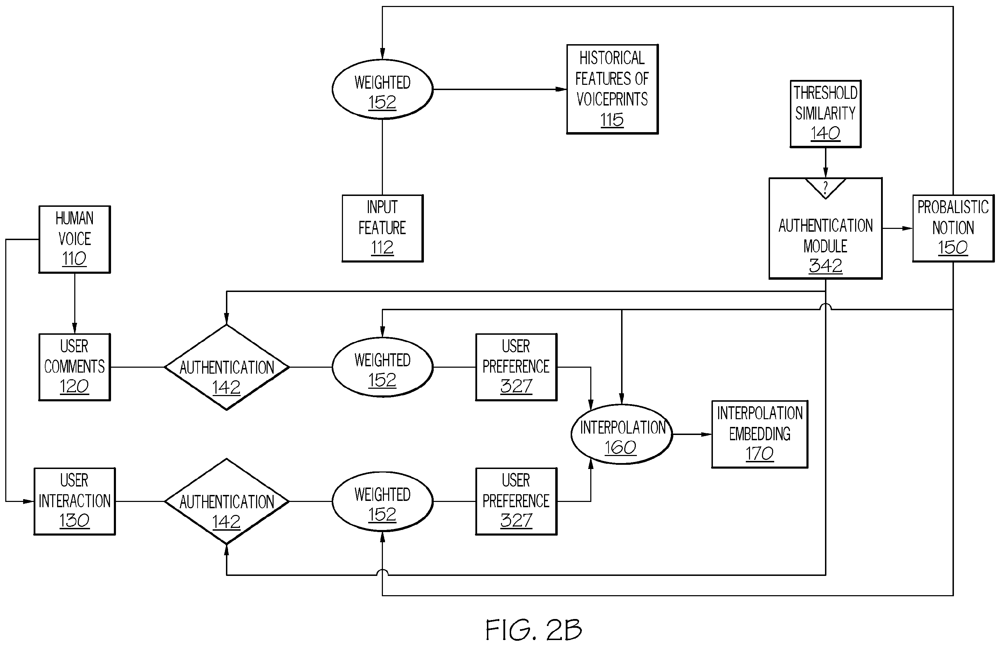

FIG. 2A and 2B depict illustrative block diagrams of an illustrative implementation of the voice feature module, the similarity module, and the authentication module to authenticate a user and generate a probabilistic notion in association with the authenticated user for weighting and interpolation.

As illustrated in the block diagram of FIG. 2A, the voiceprint authentication system 100 receives a human voice 110 of a current speaker inside the automobile and determines whether the human voice 110 belongs to an enrolled user to be authenticated and also determines a probabilistic notion 150 associated with the authentication for downstream embeddings interpolation 160 (e.g. as illustrated in FIG. 2B). More specifically, the voiceprint authentication system 100 receives a human voice 110 and sends the human voice 110 to a voice feature module 322. The voice feature module 322 includes one or more neural networks 122, which are trained to generate input features 112 based on training data comprising human voices spoken by a plurality of historical speakers inside the automobile. The input features 112 may be converted into an input vector 113 to be received by a similarity module 332. The similarity module 332 compares the input vector 113 with historical vectors 116 (e.g. all the available vectors belonging to the enrolled users in the voiceprint authentication system 100) in the voiceprints of the enrolled users to determine whether the input vector 113 is similar to at least one of the historical vectors 116 in a voiceprint belonging to an enrolled user. How similar two vectors are is measured as a similarity. After determining that a similarity between the input vector 113 and a historical vector 116 in a voiceprint belonging to an identified user is less than a threshold similarity, an authentication module 342 authenticates the current speaker who speaks the human voice 110 as the identified user. The authentication module 342 further calculates a probabilistic notion based on the similarity. The calculated probabilistic notion is applied to interpolate between downstream user preference embeddings associated with the identified user, for example between a user preference 327 and a usage embedding 337 illustrated in FIG. 2B.

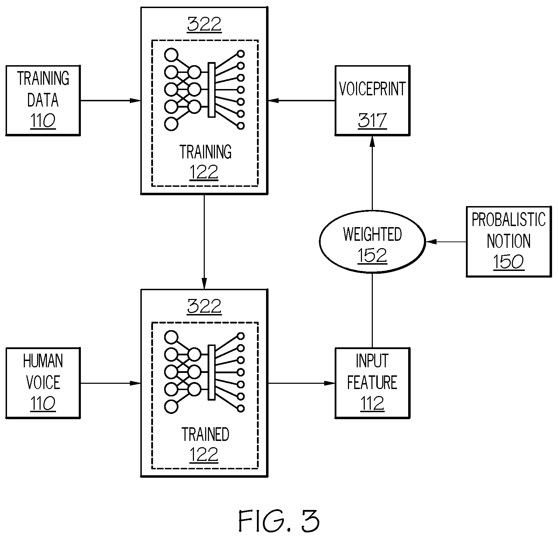

In embodiments, the voice feature module 322 uses the neural network 122 to generate a set of input features 112 based on the human voice 110. The input features 112 of a human voice may include, without limits, data of tone, pitch, volume, speed, and timbre in each speech. The features of an enrolled user may then be pooled into a voiceprint 317 (e.g. as illustrated in FIG. 3) of a user that includes all the historical features of voiceprints 115 since the user initially uses the voiceprint authentication system 100 for authentication.

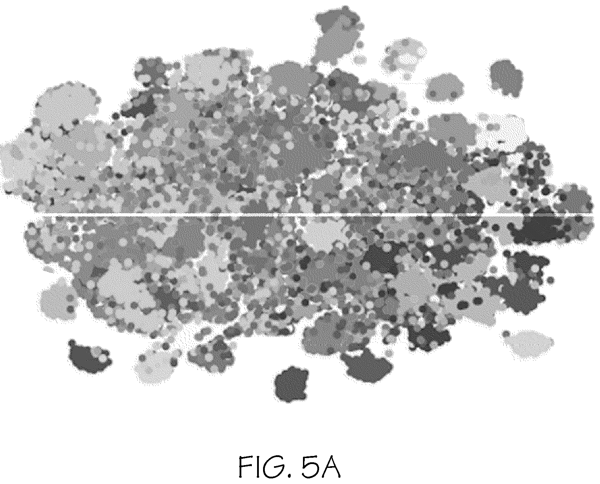

The set of input features 112 may be plotted in a coordinate system as an input vector 113. A vector is a vectored point in a coordinate system. For example, the voiceprint authentication system 100 may select a multiple-order coordinate system with each axis representing one variable of the features, where the variables may include tone, pitch, volume, speed, timbre, or the like. The voiceprint authentication system 100 may plot the vectors after receiving the speech of the same enrolled user each time into a cluster (a group of vectors), where such a cluster represents the voiceprint of that specific enrolled user. Similarly, a voiceprint 317 of an enrolled user may include all the historical features of voiceprints 115 since the user initially uses the voiceprint authentication system 100 for authentication. Also, a voiceprint 317 of an enrolled user may include all the historical vectors 116 as a cluster of an enrolled user since the user initially uses the voiceprint authentication system 100 for authentication. When the clusters belonging to various enrolled users are plotted in a coordinate system, the clusters may overlap (e.g. as illustrated in FIG. 5A). It should be noted that a cluster of the voiceprint of an enrolled user may also be generated through plotting the features within the voiceprint 317.

The similarity described herein is based on vectors (i.e. points of embeddings plotted into a coordinate system) or alternatively, on features. In embodiments, similarity may include a Euclidean similarity and a Cosine similarity. Euclidean similarity is the distance between two points of features. The greater the similarity, the closer the points are. Euclidean distance is the square root of the sum of squared differences between corresponding elements of the two vectors. Cosine Similarity is based on the angle between two vectors. Cosine similarity equals (1 - cos α), where α is the angle between two vectors. For both Euclidean similarity and Cosine similarity, a smaller value of similarity indicates the vectors are more similar. Euclidean similarity may be preferred over Cosine similarity when voiceprint authentication system 100 receives sufficient data of human voice 110 from the enrolled users. Cosine similarity may be preferred when the ratio between features matters more than the prioritization of those features. For example, if the voiceprint authentication system 100 adopts a bi-coordinate system with the x-axis representing pitch and the y-axis representing tone when a person is featured with a high pitch with a high tone, a cosine similarity may be found for a vector representing a low pitch with a low tone. This is useful to admit more voice input at the initial stage when available voice features are limited and can be used to expand the available data to further validate the specific user and personalize the user's usage preference. Accordingly, the system may strategically select which similarity to use in authentication depending on the availability of the data/features in the voiceprint for that specific user. In some embodiments, the similarity module 332 may further adopt other types of similarity such as Jaccard similarity or Dice similarity in calculating the similarity. The Jaccard similarity measures the similarity between two sets of features by counting the features of items in common and dividing by the total number of features of the two sets. Dice similarity, which is similar to Jaccard similarity, weights the counts of common features by frequencies in the two sets.

The authentication module 342 may select a threshold similarity 140 to indicate a bottom line that the human voice received by the voiceprint authentication system 100 is recognized as the voice of an enrolled user. A low value of the threshold similarity 140 suggests a high authentication and privacy protection excludes a person from unauthorized usage. However, during an initial usage of the voiceprint authentication system 100, a higher value may be adopted to admit more voice data into the system to increase the pool of the historical features of voiceprints 115 and allow the neural network 122 to be personalized to the one or more users. At a later stage, a lower threshold similarity 140 may be chosen when the system finds that sufficient confidential data is available. Occasionally, clusters (a group of vectors) of voiceprints may overlap. The voiceprint authentication system 100 may find high confidence that a human voice 110 belongs to two enrolled users because the input vector 113 generated based on the human voice 110 is plotted in the overlapped area of two clusters. At that point, the authentication may cause inaccurate weighted integration and interpolation 160. Solutions for such inaccuracy are presented further below.

In embodiments, when the voiceprint authentication system 100 determines that a human voice does not belong to any enrolled user, the voiceprint authentication system 100 may create a voiceprint for a non-user. With such ability, the voiceprint authentication system 100 may include a plurality of voiceprints of non-users. Thus, the similarity module 332 (e.g. as illustrated in FIG. 2A) may determine a similarity between the input vector and voiceprints of one or more non-users. After determining that the similarity is less than the threshold similarity, the voiceprint authentication system 100 may integrate the input vector 113 into the voiceprints of a non-user. Further, in determining that the similarity exceeds the threshold similarity, the voiceprint authentication system 100 may create a voiceprint of a non-user based on the input vector 113. The function to create voiceprints for non-users allows the convenience of creating a high-confidence user voiceprint once a non-user may be later enrolled as a user.

The authentication module 342 determines a probabilistic notion 150 based on the similarity 118 calculated by the similarity module 332 between the input vector 113 and the historical vectors 116. The probabilistic notion 150 may include a weight factor inversely proportional to the similarity 118, where the weight factor has a value between 0 and 1. When the similarity suggests the input vector 113 is identical to a vector in the historical vectors 116, the weight factor may equal to 1. When the similarity suggests the input vector 113 is outside all the historical vectors 116, the weight factor may equal to 0.

Referring to FIG. 2B, an illustrative block diagram of an illustrative implementation of the authentication module for authentication and generation of a probabilistic notion for weighting and interpolation is depicted. After the authentication module 342 generates the probabilistic notion 150, the probabilistic notion 150 is used to weight the different features in different user embeddings for the fact that some features are more important than others. For example, the probabilistic notion may be used to cluster users into different groups, which is helpful to identify users who have similar preferences or to predict how a user will respond to a new piece of content such that the vehicle system may predict or recommend content that the user is likely to enjoy.

Particularly, the probabilistic notion 150 may be used for incorporating real-time generated features and vectors into embeddings in the voiceprint authentication system 100 and other systems in the vehicle. For example, the input features 112 may be weighted 152 before being pooled into the historical features of voiceprints 115 of the identified user, a user comment 120 derived from the human voice 110 may be weighted 152 before pooled into a user preference 327, and a user interaction 130 derived from the human voice 110 may be weighted 152 before pooled into a usage embedding.

The authentication module, after determining a probabilistic notion 150 based on the similarity 118 calculated by the similarity module 332 between the input vector 113 and the historical vectors 116, may also grant authentication 142 of the speaker of the human voice 110. Under such authentication, the speaker may be authenticated to use various functions in the vehicle system, such as using human voice 110 to command the vehicle to control the sub-systems of the vehicles. The speaker may command the vehicle to turn on or off radios or media players, make phone calls, conduct searches, and the like.

In embodiments, after the voiceprint authentication system 100 determines an authentication 142 is available for the identified user based on the human voice 110, the voiceprint authentication system 100 may further determine whether the human voice 110 includes a user comment 120, for example, the identified user provides a positive comment on a newly opened restaurant. After determining the human voice 110 and user comment 120, the voiceprint authentication system 100 may weight the user comment 120 based on the probabilistic notion 150 and integrate the weighted 152 user comment 120 into the user preference 327. Similarly, after the voiceprint authentication system 100 determines an authentication 142 is available for the identified user based on the human voice 110, the voiceprint authentication system 100 may further determine whether the human voice 110 includes a user interaction 130, for example, the identified user commands the vehicle system to play a specific song or make a phone call to the identified user's friend. After determining the human voice 110 and the user interaction 130, the voiceprint authentication system 100 may weight the user interaction 130 based on the probabilistic notion 150 and integrate the weighted 152 user interaction 130 into the usage embedding 337.

The probabilistic notion 150 is used to interpolate between different embeddings, in particular the downstream user preference embeddings associated with the identified user. The downstream user preference embeddings may refer to the user preference embeddings that need a voiceprint authentication before providing services associated with the user preference embeddings or integrating new inputs into the user preference embeddings. The user preference embeddings may be collected from a variety of sources, such as commands to the vehicle system, website logs, and app usage data of the enrolled users. The user preferences may be incrementally calculated based on user comments narrated by the identified user during authenticating and dynamically integrated into historical user preferences. The downstream user preference embeddings include the user preference 327 and the usage embedding as described above. The probabilistic notion 150 may be used to enable an interpolation 160 between downstream high-dimensional user preference embeddings by providing a common representation of the identified user across downstream user preferences using different devices and applications. For example, an interpolated embedding 170 may be generated with the formula *α*×(user preference 327) +(1-*α*) ×(usage embedding 337), where *α* is the weight factor. The weight factor having a value between 0 and 1 is inversely proportional to similarity 118, and it may represent the relative importance of the two user preference embeddings, the user preference 327 and the usage embedding 337. The interpolated embedding 170 can then be used to make predictions about the user's preferences. For example, the vehicle system may predict whether an authenticated user is likely to order a pizza from one of the local pizza shops by calling through the vehicle system for delivery or driving directly to pick it up. Further, the vehicle system may use the interpolated embedding 170 as one of the features in a machine-learning model.

Referring to FIG. 3, an example neural network 122 of the voice feature module 322 in the voiceprint authentication system 100 that is being trained using training data and real-time data is depicted. The neural network 122 in the voiceprint authentication system 100 is used to generate features derived from a human voice 110 collected in the vehicle system. The neural network 122 may be pre-trained with features based on training data 347 comprising human voices spoken by a plurality of historical speakers inside the vehicle. Once the neural network 122 is pre-trained, it may be used to generate input features 112 derived from a human voice 110. The input features 112 may be weighted using the probabilistic notion 150 to integrate into the voiceprint 317 of the associated enrolled user, which in turn is used to continuously train the neural network 122.

In embodiments, the neural network 122 may include an incremental learning algorithm that dynamically integrates the input features 112 weighted based on the probabilistic notion 150 into the voiceprint 317 of the identified user. The incremental learning algorithm provides the ability to the neural network 122 to accumulate the historical features of previous tasks and capture the input features 112 of the current task simultaneously. For example, a newly updated voiceprint by the neural network 122 is fed back to the neural network 122 to train the neural network 122 based on the just processed data based on human voice 110. This process is repeated as new human voice 110 becomes available, which allows the neural network 122 to continuously improve its accuracy. The incremental learning algorithm may allow the neural network 122 to generate features with little or no pre-training data. The incremental learning algorithm may work in four different models in this situation. In an evaluation mode, the incremental learning algorithm tracks the predictive performance of the model on the incoming data such as human voice 110 or over the entire history of the model used for incremental learning. In a detect drift mode, the incremental learning algorithm validates whether the predicted feature exhibits structural breaks or distribution drift, such as whether the distribution of the predicted features exhibit has sufficiently changed. In an active training mode, the incremental learning algorithm may also actively train itself by updating the model based on the incoming data such as human voice 110. In a generating prediction mode, the incremental learning algorithm may generate features with predicted labels from the latest model. The neural network 122 may robustly switch between these modes depending on the sufficiency of voice data existing for an incremental model to generate predictions, and the sufficiency of training for concise prediction of features.

Referring to FIG. 4, an example internal view of a vehicle equipped with the voiceprint authentication system 100 with the hardware for detecting speech in the vehicle and initializing a voiceprint registration in the vehicle is depicted. As illustrated in FIG. 4, a voiceprint authentication system 100 may include one or more sound sensors 402 inside the vehicle to detect and process the sound waves that are produced when a person speaks in the vehicle. The sound sensors may be located in the ceiling, dashboard, or center console of the vehicle. The sound sensors may be connected to one or more microphones picking up the soundwaves. The soundwaves are then processed by the controller 101 which converts the soundwaves into digital signals.

The voiceprint authentication system 100 may further include a button and a touchscreen to initialize a voiceprint registration for a new user. The voiceprints of one or more enrolled users are enrolled through an initial implementation. The initial implementation may include a physical or vocal trigger of enrollment to initialize the enrollment. A user who wants to be enrolled via the vocal trigger of enrollment may need to request an enrolled user to be authenticated by the voiceprint authentication system 100 and to authorize the enrollment process. A user who wants to be enrolled via the physical trigger of enrollment may need to physically press the button 404 or touch the touchscreen 406 to access the setting menu of the voiceprint authentication system 100 and initialize a voice registration process. Once the voiceprint authentication system 100 indicates the voice registration process has begun, the user may provide a voice sample to the system to create the initial voiceprint. For example, the user may read a predetermined script to create a voiceprint. In another example, the user may speak any set of words without following a script. A wave file of the user's voice is then input into the neural network, may be pre-trained, to create a plurality of vectors representing features of the user's voice, and may store the vectors in the voiceprint authentication system 100. The voiceprint authentication system 100 may further tailor the initial voiceprint based on the average of a user's registration phrases in the cluster of the initial voiceprint.

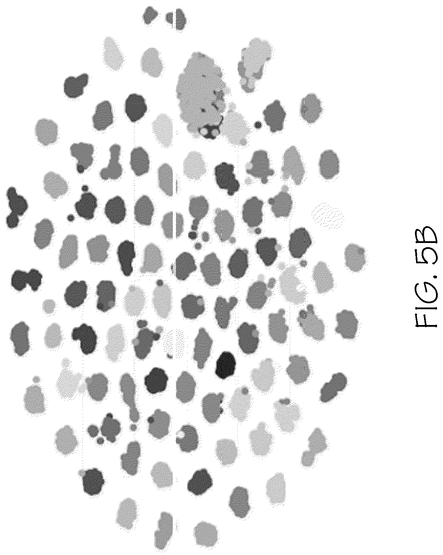

Referring to FIGS. 5A and 5B, an example of reducing voiceprints of multiple users for more precise learned features is depicted. As illustrated in FIG. 5A, clusters of voiceprints of multiple users may overlap with each other. An overlap between different clusters is an issue because an input vector 113 may be considered highly similar to more than one enrolled user, and the voiceprint authentication system 100 may have difficulty accurately determining which user embedding to activate.

Further, a voiceprint belonging to a user may have isolated vectors away from the main area of the cluster. If a voiceprint has isolated vectors away from the main area of the cluster, it can be difficult for the voiceprint authentication system 100 to identify the user. This may be unavoidable when the user has a unique speech pattern that is not well-represented by the other vectors in the cluster (a truly isolated vector). However, in some cases, such isolated vectors are present due to artificial reasons. For example, the user may have been speaking in a noisy environment, which can make it difficult to capture all of the features of their voice, or the user may have been speaking quickly, which can also make it difficult to capture all of the features of their voice. Thus, it is desirable to remove these isolated vectors.

To address the above-mentioned issues, the voiceprint authentication system 100 may include a function to shrink the voiceprints to an extent that the voiceprint authentication system 100 can efficiently and accurately recognize a user. Voiceprint shrinking refers to reducing the dimensionality of the voiceprint representation of a user's voice to enhance the accuracy of voice recognition. This technique can be achieved through the use of neural networks. For example, the neural network 122 may shrink the voiceprint of the identified user by removing a feature of the voiceprint having a confidence less than a threshold confidence. To allow the neural network 122 to have such a function, the neural network 122 may be trained to recognize the different features that make up a voiceprint and the same features of a voiceprint that may belong to different users. The trained neural network 122 may be used to extract features from the original voiceprints (e.g. as shown in FIG. 5A) to create new, smaller voiceprints (e.g. as shown in FIG. 5B). The new voiceprints are smaller than the original voiceprint, but retain the important features. During the extraction, a confidence value may be used to determine which features are retained in the new voiceprint. Features with a confidence value greater than the threshold will be retained, while features with a confidence value below the threshold will be discarded. The choice of confidence value depends on the application. For example, the voiceprints used for identification require a high confidence value to ensure that the new voiceprint is more accurate. The methods to extract features may include principal component analysis (PCA) or recursive feature elimination (RFE). Particularly, as illustrated in FIG. 5B, the voiceprints may be shrunk by removing the features of a voiceprint overlapping with another voiceprint. In some embodiments, the voiceprint authentication system 100 may include a machine learning function to differentiate the truly isolated vector from other isolated vectors because if the truly isolated vector is removed, it may risk falsely denying an authentication.

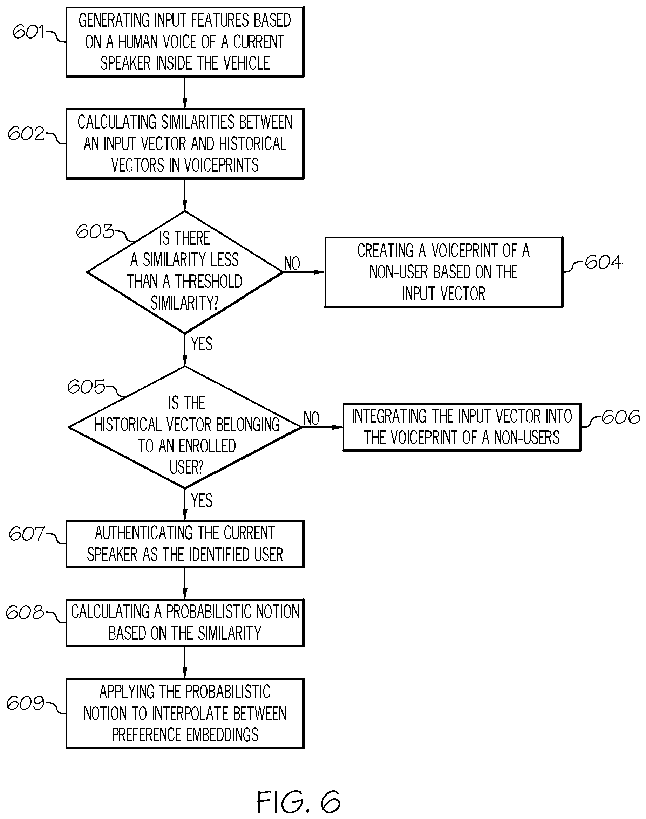

Referring to FIG. 6, an example flowchart describing the operation of the voiceprint authentication system 100 of the present disclosure for voiceprint authentication 142 and interpolation 160 is depicted. At step 601, the voice feature module 322, using the neural network 122, generates input features based on the human voice 110 of a current speaker inside the vehicle. The human voice 110 may be received using the sound sensor 402. The neural network 122 may be pre-trained based on training data 347 including human voices spoken by a plurality of historical speakers inside the vehicle and may be continuously trained during the usage of the voiceprint authentication system 100.

At step 602, the similarity module 332 calculates similarities between the input vector 113 of the input features 112 and historical vectors 116 in the voiceprints of the one or more enrolled users. At step 603, the authentication module 342 determines whether at least one similarity between the input vector 113 and historical vectors 116 in a voiceprint 317 is less than a threshold similarity 140.

If no similarity between the input vector 113 and historical vectors 116 is less than the threshold similarity (No at step 603), then at step 604, the voiceprint authentication system 100 may create a voiceprint 317 of a non-user based on the input vector 113 of the input features 112. If at least one similarity between the input vector 113 and historical vectors 116 is less than the threshold similarity 140 (Yes at step 603), then at step 605, the authentication module 342 determines whether the historical vector 116 that is highly similar to the input vector 113 belongs to an enrolled user.

If the authentication module 342 determines that the historical vector does not belong to an enrolled user (No at step 605), then at step 606, the authentication module 342 recognizes the current speaker as a non-user, and the voiceprint authentication system 100 may integrate the input vector 113 into the voiceprint of the non-user. If the authentication module 342 determines that the historical vector does belong to an enrolled user (Yes at step 605), then at step 607, the authentication module 342 recognizes the current speaker as an identified user, and authenticates the current speaker as the identified user.

At step 608, the authentication module 342 calculates a probabilistic notion 150 based on the similarity 118. At step 609, the voiceprint authentication system 100 applies the probabilistic notion 150 to interpolate between preference embeddings associated with the identified user. For example, the voiceprint authentication system 100 may interpolate between the user preference 327 integrating weighted user comments 120 and the usage embedding 337 integrating weighted user interaction 130.

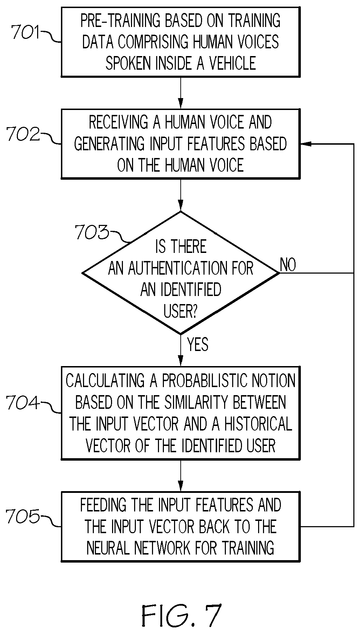

Referring to FIG. 7, an example flowchart describing the operation of the neural network 122 of the voiceprint authentication system 100 is depicted. At step 701, the neural network 122 may be pre-trained based on training data 347 comprising human voices spoken inside the vehicle. The training data 347 may further include background sounds in the vehicle such that the neural network 122 may be trained to remove background noises associated with the human voice. The neural network 122 may further be trained to determine whether a receiving sound wave picked by the sound sensor 402 is recorded inside the vehicle or whether the receiving sound wave is a record rather than a real-time speech.

At step 702, the sound sensor 402 receives a human voice and the neural network 122 within the voice feature module 322 generates the input features 112 based on the incoming data such as human voice 110.

At step 703, the authentication module 342 determines whether to authenticate an identified user. If there is not authentication for an identified user (No at step 703), the neural network 122 may decline to take the input features for training and wait for receiving a new human voice to generate input features based on the new human vice at step 702.

If there is an authentication for an identified user (Yes at step 703), at step 704, the authentication module 342 calculates a probabilistic notion 150 based on the similarity 118 between the input vector 113 and a historical vector 116 of the identified user.

At step 705, the voiceprint authentication system 100 feeds the input features 112 and the input vector 113 to the neural network 122 for training. After training, the voiceprint authentication system 100 may receive another human voice 110 for another round of training and thereby continuously improve the accuracy of the neural network 122.

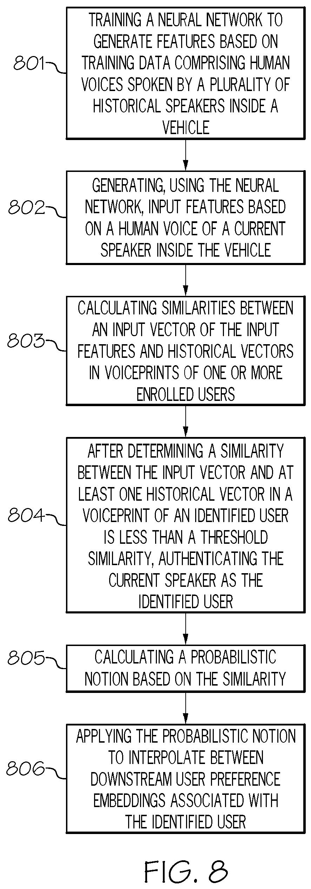

Referring to FIG. 8, an example flowchart describing the steps of the method for authenticating a speaker and applying a probabilistic notion for interpolation is depicted. At step 801, the method includes a step of training a neural network to generate features based on training data comprising human voices spoken by a plurality of historical speakers inside a vehicle. At step 802, the method includes a step of generating, using the neural network, input features based on a human voice of a current speaker inside the vehicle. At step 803, the method includes a step of calculating similarities between an input vector of the input features and historical vectors in voiceprints of one or more enrolled users. At step 804, the method includes a step of after determining a similarity between the input vector and at least one historical vector in a voiceprint of an identified user is less than a threshold similarity, authenticating the current speaker as the identified user. At step 805, the method includes a step of calculating a probabilistic notion based on the similarity. At step 806, the method includes a step of applying the probabilistic notion to interpolate between downstream user preference embeddings associated with the identified user.

The terminology used herein is for the purpose of describing particular aspects only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. The term "or a combination thereof" means a combination including at least one of the foregoing elements.

## Claims

1. A method comprising:
generating, using a neural network (122) trained to generate features based on training data (347) comprising human voices (110) spoken by a plurality of historical speakers inside a vehicle, input features based on a human voice of a current speaker inside the vehicle;
calculating similarities (118) between an input vector (113) of the input features (112) and historical vectors (116) in voiceprints (317) of one or more enrolled users;
after determining a similarity between the input vector and at least one historical vector in a voiceprint of an identified user is less than a threshold similarity (140), authenticating the current speaker as the identified user;
the method **characterised in that** it further comprises:
calculating a probabilistic notion (150) based on the similarity; and
interpolating (160) downstream user preference embeddings (327, 337) to generate an interpolated embedding (170) by applying the probabilistic notion to weigh (152) each downstream user preference embedding associated with the identified user.

2. The method of claim 1, wherein the probabilistic notion comprises a weight factor inversely proportional to the similarity; and
the interpolated embedding is a sum of each weighted downstream user preference embedding based on the weight factor.

3. The method of claim 1, wherein the downstream user preference embeddings comprise a user preference and a usage embedding, where
the user preference comprises user preferences calculated based on user comments narrated by the identified user during authentication and dynamic integration into historical user preferences; and
the usage embedding comprises user interactions with the vehicle.

4. The method of claim 3, wherein:
after authenticating the identified user, further determining whether the human voice comprises a user interaction with the vehicle, and
after determining the human voice comprises the user interaction, integrating the user interaction weighted based on the probabilistic notion into the usage embedding associated with the identified user.

5. The method of claim 1, wherein the neural network comprises an incremental learning algorithm that dynamically integrates the input features weighted based on the probabilistic notion into the voiceprint of the identified user.

6. The method of claim 1, wherein the method further comprises shrinking the voiceprint of the identified user by removing a feature of the voiceprint having a confidence less than a threshold confidence.

7. The method of claim 6, wherein the voiceprint of the identified user is shrunk by removing the feature of the voiceprint overlapping with a voiceprint of another enrolled user.

8. The method of claim 1, wherein the voiceprints of one or more enrolled users are enrolled through an initial implementation, the initial implementation comprising a physical or vocal trigger of enrollment to initialize the enrollment and a recording of the human voice to create the voiceprint to be enrolled.

9. The method of claim 1, wherein the method further comprises:
calculating a non-user similarity between the input vector and vectors of voiceprints of one or more non-users;
determining whether the non-user similarity is less than, equal to, or exceeds the threshold similarity;
after determining the non-user similarity is less than the threshold similarity, integrating the input vector into the voiceprint of the one or more non-users; and
after determining the non-user similarity exceeds or equals the threshold similarity, creating a voiceprint of a non-user based on the input vector.

10. A system comprising a controller to:
generate, using a neural network (122) trained to generate features based on training data (347) comprising human voices (110) spoken by a plurality of historical speakers inside a vehicle, input features based on a human voice of a current speaker inside the vehicle;
calculate similarities between an input vector of the input features and historical vectors in voiceprints of one or more enrolled users;
after determining a similarity (118) between the input vector (113) and at least one historical vector (116) in a voiceprint (317) of an identified user is less than a threshold similarity (140), authenticate the current speaker as the identified user;
calculate a probabilistic notion (150) based on the similarity; and
the system **characterised in that** the controller is further configured to interpolate (160) downstream user preference embeddings (327, 337) to generate an interpolated embedding (170) by applying the probabilistic notion to weigh (152) each downstream user preference embedding associated with the identified user.

11. The system of claim 10, wherein the probabilistic notion comprises a weight factor inversely proportional to the similarity; and
the interpolated embedding is a sum of each weighted downstream user preference embedding based on the weight factor.

12. The system of claim 10, wherein the downstream user preference embeddings comprise a user preference and a usage embedding, where
the user preference comprises user preferences calculated based on user comments narrated by the identified user during authenticating and dynamically integrated into historical user preferences; and
the usage embedding comprises user interactions with the vehicle.

13. The system of claim 12, wherein:
after authenticating the identified user, further determining whether the human voice comprises a user interaction with the vehicle, and
after determining the human voice comprises the user interaction, integrating the user interaction weighted based on the probabilistic notion into the usage embedding associated with the identified user.

14. The system of claim 10, wherein the neural network comprises an incremental learning algorithm that integrates the input features weighted based on the probabilistic notion into the voiceprint of the identified user.

15. The system of claim 10, wherein the voiceprints of one or more enrolled users are enrolled through an initial implementation, the initial implementation comprising a physical or vocal trigger of enrollment to initialize the enrollment and a recording of the human voice to create the voiceprint to be enrolled.

## Patentansprüche

1. Verfahren, das Folgendes umfasst:
Erzeugen unter Verwendung eines neuronalen Netzes (122), das trainiert ist, Merkmale auf der Grundlage von Trainingsdaten (347) zu erzeugen, die menschliche Stimmen (110) umfassen, die durch mehrere historische Sprecher in einem Fahrzeug gesprochen wurden, von Eingabemerkmalen auf der Grundlage einer menschlichen Stimme eines aktuellen Sprechers im Fahrzeug;
Berechnen von Ähnlichkeiten (118) zwischen einem Eingabevektor (113) der Eingabemerkmale (112) und historischen Vektoren (116) in Stimmabdrücken (317) eines oder mehrerer registrierter Anwender und
nach einem Bestimmen, dass eine Ähnlichkeit zwischen dem Eingabevektor und mindestens einem historischen Vektor in einem Stimmabdruck eines identifizierten Anwenders kleiner als eine Schwellenwertähnlichkeit (140) ist, Authentifizieren des aktuellen Sprechers als den identifizierten Anwender; wobei
das Verfahren ferner **gekennzeichnet ist durch**:
Berechnen eines Wahrscheinlichkeitsbegriffs (150) auf der Grundlage der Ähnlichkeit und
Interpolieren (160) stromabseitiger Anwenderpräferenzeinbettungen (327, 337), um eine interpolierte Einbettung (170) zu erzeugen, indem der Wahrscheinlichkeitsbegriff angewendet wird, um jede stromabseitige Anwenderpräferenzeinbettung, die dem identifizierten Anwender zugeordnet ist, zu gewichten (152).

2. Verfahren nach Anspruch 1, wobei der Wahrscheinlichkeitsbegriff einen Gewichtsfaktor umfasst, der zur Ähnlichkeit umgekehrt proportional ist; und
die interpolierte Einbettung eine Summe jeder gewichteten stromabseitigen Anwenderpräferenzeinbettung auf der Grundlage des Gewichtsfaktors ist.

3. Verfahren nach Anspruch 1, wobei die stromabseitigen Anwenderpräferenzeinbettungen eine Anwenderpräferenz und eine Verwendungseinbettung umfassen,
die Anwenderpräferenz Anwenderpräferenzen umfasst, die auf der Grundlage von Anwenderkommentaren, die durch den identifizierten Anwender während der Authentifizierung erzählt wurden, und einer dynamischen Integration in historische Anwenderpräferenzen berechnet werden; und
die Verwendungseinbettung Anwenderinteraktionen mit dem Fahrzeug umfasst.

4. Verfahren nach Anspruch 3, wobei:
nach dem Authentifizieren des identifizierten Anwenders ferner bestimmt wird, ob die menschliche Stimme eine Anwenderinteraktion mit dem Fahrzeug umfasst, und
nach dem Bestimmen, dass die menschliche Stimme die Anwenderinteraktion umfasst, die auf der Grundlage des Wahrscheinlichkeitsbegriffs gewichteten Anwenderinteraktion in die Verwendungseinbettung, die dem identifizierten Anwender zugeordnet ist, integriert wird.

5. Verfahren nach Anspruch 1, wobei das neuronale Netz einen Algorithmus für inkrementelles Lernen umfasst, der die auf der Grundlage des Wahrscheinlichkeitsbegriffs gewichteten Eingabemerkmale in den Stimmabdruck des identifizierten Anwenders dynamisch integriert.

6. Verfahren nach Anspruch 1, wobei das Verfahren ferner ein Verkleinern des Stimmabdrucks des identifizierten Anwenders durch Entfernen eines Merkmals des Stimmabdrucks umfasst, das eine Konfidenz aufweist, die kleiner als eine Schwellenwertkonfidenz ist.

7. Verfahren nach Anspruch 6, wobei der Stimmabdruck des identifizierten Anwenders durch Entfernen des Merkmals des Stimmabdrucks, das mit einem Stimmabdruck eines weiteren registrierten Anwenders überlappt, verkleinert wird.

8. Verfahren nach Anspruch 1, wobei die Stimmabdrücke eines oder mehrerer registrierter Anwender durch eine anfängliche Implementierung registriert werden und die anfängliche Implementierung einen physischen oder einen stimmlichen Auslöser einer Registrierung, um die Registrierung zu initialisieren, und ein Aufzeichnen der menschlichen Stimme, um den Stimmabdruck, der registriert werden soll, zu erstellen, umfasst.

9. Verfahren nach Anspruch 1, wobei das Verfahren ferner Folgendes umfasst:
Berechnen einer Nichtanwenderähnlichkeit zwischen dem Eingabevektor und Vektoren von Stimmabdrücken eines oder mehrerer Nichtanwender;
Bestimmen, ob die Nichtanwenderähnlichkeit kleiner, gleich oder größer als die Schwellenwertähnlichkeit ist; nach einem Bestimmen, dass die Nichtanwenderähnlichkeit kleiner als die Schwellenwertähnlichkeit ist, Integrieren des Eingabevektors in den Stimmabdruck des einen oder der mehreren Nichtanwender; und
nach einem Bestimmen, dass die Nichtanwenderähnlichkeit größer oder gleich der Schwellenwertähnlichkeit ist, Erstellen eines Stimmabdrucks eines Nichtanwenders auf der Grundlage des Eingabevektors.

10. System, das eine Steuereinheit umfasst zum:
Erzeugen unter Verwendung eines neuronalen Netzes (122), das trainiert ist, Merkmale auf der Grundlage von Trainingsdaten (347) zu erzeugen, die menschliche Stimmen (110) umfassen, die durch mehrere historische Sprecher in einem Fahrzeug gesprochen wurden, von Eingabemerkmalen auf der Grundlage einer menschlichen Stimme eines aktuellen Sprechers im Fahrzeug;
Berechnen von Ähnlichkeiten zwischen einem Eingabevektor der Eingabemerkmale und historischen Vektoren in Stimmabdrücken eines oder mehrerer registrierter Anwender;
nach einem Bestimmen, dass eine Ähnlichkeit (118) zwischen dem Eingabevektor (113) und mindestens einem historischen Vektor (116) in einem Stimmabdruck (317) eines identifizierten Anwenders kleiner als eine Schwellenwertähnlichkeit (140) ist, Authentifizieren des aktuellen Sprechers als den identifizierten Anwender; und
Berechnen eines Wahrscheinlichkeitsbegriffs (150) auf der Grundlage der Ähnlichkeit; wobei
das System **dadurch gekennzeichnet ist, dass** die Steuereinheit ferner konfiguriert ist zum Interpolieren (160) stromabseitiger Anwenderpräferenzeinbettungen (327, 337), um eine interpolierte Einbettung (170) zu erzeugen, indem der Wahrscheinlichkeitsbegriff angewendet wird, um jede stromabseitige Anwenderpräferenzeinbettung, die dem identifizierten Anwender zugeordnet ist, zu gewichten (152).

11. System nach Anspruch 10, wobei der Wahrscheinlichkeitsbegriff einen Gewichtsfaktor umfasst, der zur Ähnlichkeit umgekehrt proportional ist; und
die interpolierte Einbettung eine Summe jeder gewichteten stromabseitigen Anwenderpräferenzeinbettung auf der Grundlage des Gewichtsfaktors ist.

12. System nach Anspruch 10, wobei die stromabseitigen Anwenderpräferenzeinbettungen eine Anwenderpräferenz und eine Verwendungseinbettung umfassen,
die Anwenderpräferenz Anwenderpräferenzen umfasst, die auf der Grundlage von Anwenderkommentaren, die durch den identifizierten Anwender während des Authentifizierens erzählt wurden und in historische Anwenderpräferenzen dynamisch integriert wurden, berechnet werden; und
die Verwendungseinbettung Anwenderinteraktionen mit dem Fahrzeug umfasst.

13. System nach Anspruch 12, wobei:
nach dem Authentifizieren des identifizierten Anwenders ferner bestimmt wird, ob die menschliche Stimme eine Anwenderinteraktion mit dem Fahrzeug umfasst, und
nach dem Bestimmen, dass die menschliche Stimme die Anwenderinteraktion umfasst, die auf der Grundlage des Wahrscheinlichkeitsbegriffs gewichteten Anwenderinteraktion in die Verwendungseinbettung, die dem identifizierten Anwender zugeordnet ist, integriert wird.

14. System nach Anspruch 10, wobei das neuronale Netz einen Algorithmus für inkrementelles Lernen umfasst, der die auf der Grundlage des Wahrscheinlichkeitsbegriffs gewichteten Eingabemerkmale in den Stimmabdruck des identifizierten Anwenders integriert.

15. System nach Anspruch 10, wobei die Stimmabdrücke eines oder mehrerer registrierter Anwender durch eine anfängliche Implementierung registriert werden und die anfängliche Implementierung einen physischen oder einen stimmlichen Auslöser einer Registrierung, um die Registrierung zu initialisieren, und ein Aufzeichnen der menschlichen Stimme, um den Stimmabdruck, der registriert werden soll, zu erstellen, umfasst.

## Revendications

1. Procédé comprenant :
la génération, au moyen d'un réseau de neurones (122) entraîné pour générer des caractéristiques sur la base de données d'entraînement (347) comprenant des voix humaines (110) produites par une pluralité de locuteurs historiques à l'intérieur d'un véhicule, de caractéristiques d'entrée sur la base d'une voix humaine d'un locuteur courant à l'intérieur du véhicule ;
le calcul de similarités (118) entre un vecteur d'entrée (113) des caractéristiques d'entrée (112) et des vecteurs historiques (116) dans des empreintes vocales (317) d'un ou de plusieurs utilisateurs inscrits ;
après détermination qu'une similarité entre le vecteur d'entrée et au moins un vecteur historique dans une empreinte vocale d'un utilisateur identifié est inférieure à un seuil de similarité (140), l'authentification du locuteur courant en tant qu'utilisateur identifié ;
le procédé étant **caractérisé en ce qu'**il comprend en outre :
le calcul d'une notion probabiliste (150) sur la base de la similarité ; et
l'interpolation (160) de plongements en aval de préférences utilisateur (327, 337) afin de générer un plongement interpolé (170) par application de la notion probabiliste pour pondérer (152) chaque plongement en aval de préférence utilisateur associé à l'utilisateur identifié.

2. Procédé selon la revendication 1, dans lequel la notion probabiliste comprend un facteur de pondération inversement proportionnel à la similarité ; et
le plongement interpolé est une somme de chaque plongement en aval de préférence utilisateur pondéré sur la base du facteur de pondération.

3. Procédé selon la revendication 1, dans lequel les plongements en aval de préférences utilisateur comprennent une préférence utilisateur et un plongement d'utilisation,
la préférence utilisateur comprenant des préférences utilisateur calculées sur la base de commentaires utilisateur énoncés par l'utilisateur identifié pendant l'authentification et l'intégration dynamique dans des préférences utilisateur historiques ; et
le plongement d'utilisation comprenant des interactions utilisateur avec le véhicule.

4. Procédé selon la revendication 3, dans lequel :
après authentification de l'utilisateur identifié, la détermination en outre de si la voix humaine comprend une interaction utilisateur avec le véhicule, et
après détermination que la voix humaine comprend l'interaction utilisateur, l'intégration de l'interaction utilisateur pondérée sur la base de la notion probabiliste dans le plongement d'utilisation associé à l'utilisateur identifié.

5. Procédé selon la revendication 1, dans lequel le réseau de neurones comprend un algorithme d'apprentissage incrémental qui intègre dynamiquement les caractéristiques d'entrée pondérées sur la base de la notion probabiliste dans l'empreinte vocale de l'utilisateur identifié.

6. Procédé selon la revendication 1, le procédé comprenant en outre le rétrécissement de l'empreinte vocale de l'utilisateur identifié par suppression d'une caractéristique de l'empreinte vocale dont la confiance est inférieure à un seuil de confiance.

7. Procédé selon la revendication 6, dans lequel l'empreinte vocale de l'utilisateur identifié est rétrécie par suppression de la caractéristique de l'empreinte vocale présentant un chevauchement avec une empreinte vocale d'un autre utilisateur inscrit.

8. Procédé selon la revendication 1, dans lequel les empreintes vocales d'un ou de plusieurs utilisateurs inscrits sont inscrites au moyen d'une mise en œuvre initiale, la mise en œuvre initiale comprenant un déclencheur physique ou vocal d'inscription pour initialiser l'inscription et un enregistrement de la voix humaine pour créer l'empreinte vocale à inscrire.

9. Procédé selon la revendication 1, le procédé comprenant en outre :
le calcul d'une similarité de non-utilisateurs entre le vecteur d'entrée et des vecteurs d'empreintes vocales d'un ou de plusieurs non-utilisateurs ;
la détermination de si la similarité de non-utilisateurs est inférieure, égale, ou supérieure au seuil de similarité ;
après détermination que la similarité de non-utilisateurs est inférieure au seuil de similarité, l'intégration du vecteur d'entrée dans l'empreinte vocale du ou des non-utilisateurs ; et
après détermination que la similarité de non-utilisateurs est supérieure ou égale au seuil de similarité, la création d'une empreinte vocale d'un non-utilisateur sur la base du vecteur d'entrée.

10. Système comprenant un contrôleur pour :
générer, au moyen d'un réseau de neurones (122) entraîné pour générer des caractéristiques sur la base de données d'entraînement (347) comprenant des voix humaines (110) produites par une pluralité de locuteurs historiques à l'intérieur d'un véhicule, des caractéristiques d'entrée sur la base d'une voix humaine d'un locuteur courant à l'intérieur du véhicule ;
calculer des similarités entre un vecteur d'entrée des caractéristiques d'entrée et des vecteurs historiques dans des empreintes vocales d'un ou de plusieurs utilisateurs inscrits ;
après détermination qu'une similarité (118) entre le vecteur d'entrée (113) et au moins un vecteur historique (116) dans une empreinte vocale (317) d'un utilisateur identifié est inférieure à un seuil de similarité (140), authentifier le locuteur courant en tant qu'utilisateur identifié ;
calculer une notion probabiliste (150) sur la base de la similarité ; et
le système étant **caractérisé en ce que** le contrôleur est configuré en outre pour interpoler (160) des plongements en aval de préférences utilisateur (327, 337) afin de générer un plongement interpolé (170) en appliquant la notion probabiliste pour pondérer (152) chaque plongement en aval de préférence utilisateur associé à l'utilisateur identifié.

11. Système selon la revendication 10, dans lequel la notion probabiliste comprend un facteur de pondération inversement proportionnel à la similarité ; et
le plongement interpolé est une somme de chaque plongement en aval de préférence utilisateur pondéré sur la base du facteur de pondération.

12. Système selon la revendication 10, dans lequel les plongements en aval de préférences utilisateur comprennent une préférence utilisateur et un plongement d'utilisation,
la préférence utilisateur comprenant des préférences utilisateur calculées sur la base de commentaires utilisateur énoncés par l'utilisateur identifié pendant l'authentification et intégrées dynamiquement dans des préférences utilisateur historiques ; et
le plongement d'utilisation comprenant des interactions utilisateur avec le véhicule.

13. Système selon la revendication 12, dans lequel :
après authentification de l'utilisateur identifié, la détermination en outre de si la voix humaine comprend une interaction utilisateur avec le véhicule, et
après détermination que la voix humaine comprend l'interaction utilisateur, l'intégration de l'interaction utilisateur pondérée sur la base de la notion probabiliste dans le plongement d'utilisation associé à l'utilisateur identifié.

14. Système selon la revendication 10, dans lequel le réseau de neurones comprend un algorithme d'apprentissage incrémental qui intègre les caractéristiques d'entrée pondérées sur la base de la notion probabiliste dans l'empreinte vocale de l'utilisateur identifié.

15. Système selon la revendication 10, dans lequel les empreintes vocales d'un ou de plusieurs utilisateurs inscrits sont inscrites au moyen d'une mise en œuvre initiale, la mise en œuvre initiale comprenant un déclencheur physique ou vocal d'inscription pour initialiser l'inscription et un enregistrement de la voix humaine pour créer l'empreinte vocale à inscrire.
